(19) Europäisches Patentamt
European Patent Office
Office européen des brevets

(11) Veröffentlichungsnummer: **0 400 273 A2**

(12) **EUROPÄISCHE PATENTANMELDUNG**

(21) Anmeldenummer: **90103935.4**

(51) Int. Cl.$^5$: **C08G 81/02, C08F 2/06**

(22) Anmeldetag: **01.03.90**

Die Bezeichnung der Erfindung wurde geändert (Richtlinien für die Prüfung im EPA, A-III, 7.3).

(30) Priorität: **14.03.89 DE 3908297**

(43) Veröffentlichungstag der Anmeldung:
**05.12.90 Patentblatt 90/49**

(84) Benannte Vertragsstaaten:
**DE FR GB IT**

(71) Anmelder: **BAYER AG**

**D-5090 Leverkusen 1 Bayerwerk(DE)**

(72) Erfinder: **Leitz, Edgar, Dr.**
**Goethestrasse 63**
**D-4047 Dormagen 1(DE)**
Erfinder: **Ott, Karl-Heinz, Dr.**
**Paul-Klee-Strasse 54**
**D-5090 Leverkusen 1(DE)**
Erfinder: **Jung, Alfred, Dr.**
**Bodelschwinghstrasse 12**
**D-4150 Krefeld 1(DE)**
Erfinder: **Grigo, Ulrich, Dr.**
**Michelsheide 9**
**D-4152 Kempen 3(DE)**
Erfinder: **Buysch, Hans-Josef, Dr.**
**Brandenburger Strasse 28**
**D-4150 Krefeld 1(DE)**
Erfinder: **Schön, Norbert, Dr.**
**Wilhelmshofallee 82**
**D-4150 Krefeld 1(DE)**

(54) **Verfahren zur Herstellung von Polycarbonat-Blockcopolymerisaten.**

(57) Verfahren zur Herstellung von Blockcopolymerisaten aus anionisch polymerisierbaren Vinylverbindungen und cyclischen aromatischen Carbonat-Oligomeren, dadurch gekennzeichnet, daß man in einer ersten Stufe anionisch polymerisierbare Vinylverbindungen zu Polymeranionen umsetzt, gegebenenfalls in einer zweiten Stufe die Reaktivität der gebildeten Polymeranionen vermindert, und in einer dritten Stufe cyclische aromatische Carbonat-Oligomere der Formel (I) zusammen mit den gebildeten Polymeranionen polymerisiert.

Formel (I) ist:

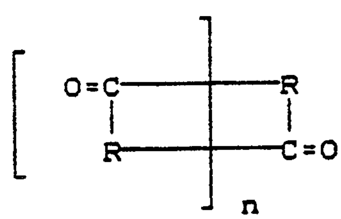

(I)

worin
n eine ganze Zahl von 1 bis 30
und
R ein Bisphenolrest ist.

EP 0 400 273 A2

## Verfahren zur Herstellung von Polycarbonat-Blockcopolymerisaten und erfindungsgemäß hergestellte Polycarbonat-Blockcopolymerisate

Die Erfindung betrifft ein Verfahren zur Herstellung von unverzweigten und unvernetzten Blockpolymerisaten aus anionisch polymerisierbaren Vinylverbindungen und cyclischen, aromatischen Carbonat-Oligomeren. Gegenstand sind außerdem die erfindungsgemäß erhältlichen Blockpolymerisate.

Die Herstellung von verzweigten Polymerisaten aus Vinylaromat-Dien-Segmenten und Polycarbonat-Segmenten durch Umsetzung von verzweigten oder partiell vernetzten Vinylaromat-Dien-Blockcopolymerisat-Anionen mit aromatischen Polycarbonaten ist bekannt. (Siehe beispielsweise DE-OS 2 712 230). Die danach erhältlichen thermoplastischen Kautschuke zeichnen sich u.a. durch eine gute Wärmebeständigkeit aus.

Ferner ist die Herstellung von segmentierten Polycarbonat-Elastomeren durch Umsetzung von Bisphenol A, Phosgen und carboxylgruppenhaltigen Polymerisaten in DE-OS 2 702 626 beschrieben.

Carboxylgruppenhaltige Polymerisate sind solche auf Basis von Polybutadien oder Butadien-Styrol-Copolymerisaten.

US-PS 4 319 003 beschreibt die Herstellung von A-B-A-Blockcopolymerisaten aus Methylmethacrylat (A-Block) und Polycarbonat (B-Block) durch Umsetzung von bifunktionellem, OH-terminiertem aromatischem Polycarbonat mit monofunktionellen Polymethylmethacrylat-formiaten.

Gegenstand der Erfindung ist ein Verfahren zur Herstellung von Blockcopolymerisaten aus anionisch polymerisierbaren Vinylverbindungen und cyclischen aromatischen Carbonat-Oligomeren, das dadurch gekennzeichnet ist, daß man in einer ersten Stufe eine oder mehrere anionisch polymerisierbare Vinylverbindungen in einem aprotischen organischen Lösungsmittel mit einer Alkylalkalimetall-oder Arylalkalimetall-Verbindung als Initiator bei Temperaturen von -100 bis +80 °C und einem Monomer Lösungsmittel-Gewichtsverhältnis von 5:100 bis 50:100 zu Polymeranionen mit einem Molgewicht $\overline{M}_w$ (Massenmittel) von 3000 bis 500000 umsetzt, gegebenenfalls in einer zweiten Stufe die Reaktivität der gebildeten Polymeranionen vermindert, z.B. durch Umsetzung mit geeigneten Verbindungen wie Epoxiden, cyclischen aliphatischen Carbonaten oder Estern, und in einer dritten Stufe cyclische aromatische Carbonat-Oligomere der Formel (I) zusammen mit den gebildeten Polymeranionen in einem polaren aprotischen organischen Lösungsmittel polymerisiert.

Formel (I) ist

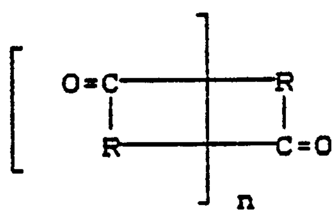

(I)

worin

n eine ganze Zahl von 1 bis 30

und

R ein Rest mit der Formel (II)

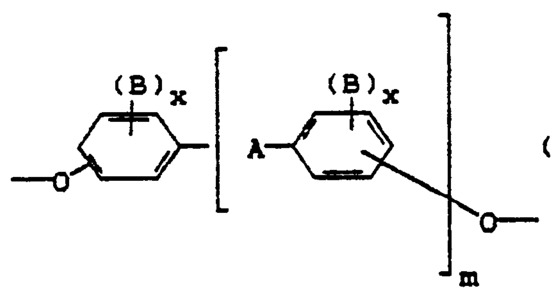

(II)

worin

A eine Einfachbindung, $C_1$- bis $C_5$-Alkylen $C_2$- bis $C_5$-Alkyliden, $C_5$- bis $C_6$-Cycloalkyliden, -O-, -SO-, -S-,

$-SO_2-$, -CO- oder ein Rest der Formel (IIa),

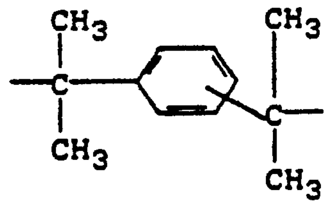

(IIa)

B Chlor, Brom oder Methyl
x die Zahlen 0, 1 oder 2 und
m die Zahlen 1 oder 0 bedeuten.

Weiterer Gegenstand der Erfindung sind die Blockcopolymerisate, bevorzugt die unverzweigten und unvernetzten Blockcopolymerisate erhältlich nach dem oben dargelegten Verfahren.

Für die erste Stufe geeignete anionisch polymerisierbare Vinylverbindungen sind z.B. Styrol, p-Methylstyrol, Vinylpyridin, Vinylnaphthalin, Isopropenylnaphthalin, 1,3-Butadien, Isopren und Methacrylacrylate oder Mischungen daraus. Bevorzugte anionisch polymerisierbare Vinyl-Verbindungen sind Styrol, 1,3-Butadien oder Isopren.

Geeignete aprotische Lösungsmittel für die erste Stufe sind aliphatische und aromatische Kohlenwasserstoffe wie Hexan, Cyclohexan, Pentan, Toluol, Benzol, Xylol oder Ether wie Tetrahydrofuran und Dioxan.

Als Polymerisations-Initiatoren für die erste Stufe sind Alkylalkalimetallverbindungen, insbesondere n-Butyl-, sec.-Butyllithium oder 1,1-Diphenylhexyllithium, ferner Arylalkalimetallverbindungen, insbesondere Na-Naphtalin oder K-Naphthalin geeignet.

Die Polymerisation in der ersten Stufe kann bei -100 bis +80° C, vorzugsweise bei -80 bis +50° C durchgeführt werden.

Das Monomer/Lösungsmittel-Gewichtsverhältnis der ersten Stufe kann von 5:100 bis 50:100, vorzugsweise von 10:100 bis 35:100 betragen.

Das Molekulargewicht $\overline{M}_w$ (Massenmittel) der in der ersten Stufe hergestellten Polymeranionen kann zwischen 3000 und 500.000 g/mol, vorzugsweise zwischen 3.000 und 250.000 g/mol liegen und ist durch den Anteil an eingesetztem Initiator einstellbar.

Geeignete Verbindungen zur Verminderung der Reaktivität der in der ersten Stufe gebildeten Polymeranionen für die zweite Stufe sind z.B. Epoxide, anionisch nicht homopolymerisierbare Vinylverbindungen, cyclische aliphatische Carbonate (z.B. Neopentylglykolcarbonat) oder Ester (z.B. ε-Caprolacton), wobei man wenigstens 1 mol jedoch maximal 10 mol der Verbindung auf 1 mol Polymeranion einsetzt. Besonders geeignete Verbindungen sind 1,1-Diphenylethen, Propylenoxid und Ethylenoxid.

Geeignete cyclische aromatische Carbonat-Oligomere für die dritte Stufe sind solche der Formel (I)

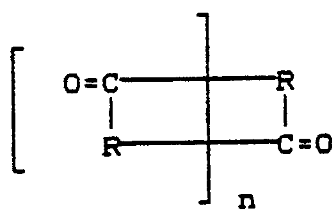

(I)

worin
n eine ganze Zahl von 1 bis 30, bevorzugt von 1 bis 20, besonders bevorzugt von 1 bis 12 und
R ein Rest mit der Formel (II) bedeutet

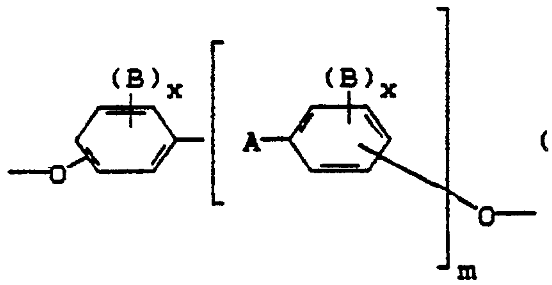

(II)

worin
A eine Einfachbindung, $C_1$-$C_5$-Alkylen, $C_2$-$C_5$-Alkyliden, $C_5$-$C_6$-Cycloalkyliden, -O-, -SO-, -S-, $-SO_2-$, -CO- oder ein Rest der Formel (IIa),

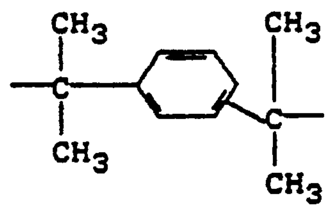

(IIa)

B Chlor, Brom oder Methyl
x die Zahlen 0, 1 oder 2 und
m die Zahlen 1 oder 0 sind.

Die Diphenole sind bekannt oder nach bekannten Verfahren herstellbar.

Reste mit der Formel (II) sind von
Hydrochinon,
Resorcin,
Dihydroxyphenylen,
Bis-(hydroxyphenyl)-$C_1$-$C_5$-alkanen,
Bis-(hydroxyphenyl)-$C_1$-$C_6$-cycloalkanen,
Bis-(hydroxyphenyl)-ethern,
Bis-(hydroxyphenyl)-sulfoxiden,
Bis-(hydroxyphenyl)-ketonen,
Bis-(hydroxyphenyl)-sulfiden,
Bis-(hydroxyphenyl)-sulfonen und α-α-Bis-(hydroxyphenyl)-diisopropylbenzolen sowie deren kernchlorierten, kernbromierten oder kernmethylierten Derivaten abgeleitet.

Bevorzugt sind Reste mit der Formel (II), die von 2,2-Bis-(4-hydroxyphenyl)-propan, 2,2-Bis-(3,5-dimethyl-4-hydroxyphenyl)-propan, 2,4-Bis-(4-hydroxyphenyl)-2-methylbutan, 1,1-Bis-(4-hydroxyphenyl)-cyclohexan, 4,4-dihydroxyphenylsulfid, 4,4-Dihydroxyphenylsulfon sowie deren di-und tetrabromierte oder chlorierte Derivate wie 2,2-Bis-(3-chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan abgeleitet sind.

Ein besonders bevorzugter Rest leitet sich von 2,2-Bis-(4-hydroxyphenyl)-propan ab.

Die Herstellung der erfindungsgemäß einzusetzenden cyclischen, aromatischen Carbonat-Oligomeren ist bekannt und beispielsweise in EP-A 0 162 379, EP-A 0 224 131, DE-OS 2 937 332, DE-OS 3 717 626, US-PS 3 274 214, US-PS 3 422 119, US-PS 3 155 683 und DE-OS 1 229 101 beschrieben.

Geeignete polare aprotische Lösungsmittel für die dritte Stufe sind vorzugsweise cyclische Ether, insbesondere Tetrahydrofuran.

Das Carbonat-Oligomer Lösungsmittel-Gewichtsverhältnis in der dritten Stufe kann von 5:100 bis 35:100, vorzugsweise von 8:100 bis 25:100 betragen.

Die Polymerisation in der dritten Stufe kann von -20 bis +80° C, vorzugsweise von 0 bis +60° C durchgeführt werden.

Das Molekulargewicht $\overline{M}_w$ (Massenmittel) der in der dritten Stufe hergestellten Polycarbonat-Blöcke kann von 5000 bis 200.000 g/mol, vorzugsweise von 10.000 bis 100.000 g/mol betragen.

In einer bevorzugten Ausführung des Verfahrens kann die Polymeranion-Lösung zu der cyclischen aromatischen Carbonat-Oligomer-Lösung gegeben werden.

Da das Verfahren den Stufen 1 bis 3 mit "lebenden" Carbanionen arbeitet, sind natürlich Bedingungen einzuhalten, unter denen "lebende" Carbanionen beständig sind, z.B. inerte Atmosphäre, Ausschluß von Luftsauerstoff und -feuchtigkeit.

Als Desaktivatoren in der dritten Stufe eignen sich protische Verbindungen wie z.B. Wasser, Alkohole, Säuren und Mischungen daraus. Bevorzugte Desaktivatoren sind Mischungen aus Methanol/Salzsäure oder Methanol/Phosphorsäure.

Die in der dritten Stufe entstandenen Copolymere können durch Ausfällen aus der Lösung, vorzugsweise unter Verwendung von Alkoholen oder durch Ausdampfen der Polymerlösung mittels bekannter Ausdampfaggregate isoliert werden.

Gegenstand der Erfindung sind weiterhin die nach dem erfindungsgemäßen Verfahren hergestellten Blockcopolymerisate aus aniionisch polymerisierbaren Vinylverbindungen und cyclischen aromatischen Carbonat-Oligomeren.

Die Blockcopolymerisate eignen sich zur Herstellung thermoplastischer Formmassen, wenn man Monovinylverbindungen (z.B. Styrol) als Vinylmonomere im erfindungsgemäßen Verfahren einsetzt. Bei Verwendung von Dienmonomeren (z.B. Isopren) als Vinylmonomere können - je nach dem Mengenverhältnis von Polycarbonat zu Polydien - Polymere mit mehr thermoplastischen oder mehr elastomeren Eigenschaften erhalten werden.

Die erfindungsgemäßen Polymere können in an sich bekannter Weise mit UV-, Oxidations- und Wärmestabilisatoren, mit Antistatika, flammhemmenden Mitteln sowie mit Pigmenten und anderen üblichen Füllstoffen ausgerüstet werden.

Die Blockcopolymere eignen sich vorzugsweise zur Herstellung von Folien, Dichtungen und Beschichtungen. Sie sind weiterhin zur Herstellung von Verpackungsmaterial, insbesondere zur Verpackung von Lebensmitteln, geeignet.

## Beispiele

### 1. Herstellung der cyclischen Bisphenol A-Carbonat-Oligomeren

Unter Stickstoff wurden 2,4 g (0,0024 mol) Triethylamin, 600 ml Methylenchlorid, 1800 ml Wasser und 36 ml 45%ige Natronlauge (0,6 mol) vorgelegt. Hierzu ließ man bei langsamer Rührgeschwindigkeit (149 U/min) im Verlauf einer Stunde gleichzeitig eine Lösung von 9,72 g (0,096 mol) Triethylamin in 600 ml Methylenchlorid und eine Lösung von 84,8 g (0,24 mol) Bisphenol A-Bischlorkohlensäureester in 1200 ml Methylenchlorid bei Raumtemperatur zutropfen. Nach 10-minütigem Nachrühren wurde mit 3,6%iger Salzsäure hydrolisiert und eine Phasentrennung durchgeführt. Die wäßrige Phase wurde mit Methylenchlorid gewaschen. Die organischen Phasen wurden vereinigt und mit Wasser gewaschen, das Rohprodukt durch Ausdampfung des Lösungsmittel isoliert (Ausbeute: 58,8 g (entsprechend 90 %)).

Die reinen cyclischen Bisphenol A-Carbonat-Oligomeren wurden durch Extraktion des Rohproduktes mit Aceton gewonnen (Ausbeute: 23,5 g (entsprechend 40 %) bezogen auf das Rohprodukt).

Die HPLC-Analyse ergab folgende Cyclen-Verteilung:

| Anzahl der Bisphenol A Carbonat-Einheiten im Cyclus | Menge Gew.-% |
|---|---|
| 2 | 5 |
| 3 | 25 |
| 4 | 19 |
| 5 | 15 |
| 6 | 10 |
| 7 | 8 |
| 8 | 6 |
| 9 | 4 |
| > 9 | 8 |

2. Herstellung eines Blockcopolymerisats aus Polystyrol und Bisphenol A-Polycarbonat

Zu einer Lösung von 5 g Styrol in 30 ml Toluol wurde bei ca. 20° C 1 ml einer 1,3 molaren Lösung von sec.-Butyllithium in einem Gemisch aus Cyclohexan und Isopentan (92:8 Vol.-%) unter schnellem Rühren und unter Stickstoff als Schutzgas gegeben. Nach einer Reaktionszeit von 60 min wurde die orange-rote Lösung bis zur Entfärbung mit 0,3 ml Propylenoxid behandelt. Die Lösung wurde dann zu einer Lösung von 20 g cyclischem Bisphenol A-Carbonat-Oligomeren in 150 ml Tetrahydrofuran gegeben. Nach einer Reaktionszeit von 120 min wurde das Reaktionsgemisch in 200 ml einer 1%igen Lösung von 1 molarer Phosphorsäure in Methanol gegossen. Das Copoly mer wurde isoliert, mit Methanol neutral gewaschen und getrocknet.

Ausbeute: 20,6 g

Die Analyse mit Hilfe der Gelpermeationschromatographie (Polystyrol Eichung) ergab ein Molekulargewicht $\overline{M}_w$ von 33.000 g/mol.

3. Herstellung eines Blockcopolymerisats aus Polystyrol und Bisphenol A-Polycarbonat

Zu einer Lösung von 10 g Styrol in 30 ml Toluol wurde bei ca. 20° C 1 ml einer 1.3 molaren Lösung von sec.-Butyllithium in einem Gemisch aus Cyclohexan und Isopentan (92:8 Vol.-%) unter schnellem Rühren und unter Stickstoff als Schutzgas gegeben. Nach einer Reaktionszeit von 90 min wurde die orange-rote Lösung mit 0,25 ml 1,1-Diphenylethylen versetzt. Nach 15 min wurde die nun dunkelrote Lösung zu einer Lösung von 10 g cyclischem Bisphenol A-Carbonat-Oligomeren in 60 ml Tetrahydrofuran gegeben. Nach einer Reaktionszeit von 120 min wurde das Reaktionsgemisch in 200 ml einer 1 %igen Lösung von 1 molarer Phosphorsäure in Methanol gegossen. Das Copolymer wurde isoliert. mit Methanol neutral gewaschen und getrocknet.

Ausbeute: 19,8 g

Die Analyse mit Hilfe der Gelpermeationschromatographie (Polystyrol-Eichung) ergab ein Molekulargewicht $\overline{M}_w$ von 19.000 g/mol.

4. Herstellung eines Blockcopolymerisats aus Poly(styrolisopren) und Bisphenol A -Polycarbonat

Zu einer Lösung von 1 g Styrol und 9 g Isopren in 30 ml Toluol wurden bei ca. 20° C 2.5 ml einer 1.3 molaren Lösung von sec.-Butyllithium in einem Gemisch aus Cyclohexan und Isopentan (92:8 Vol.-%) unter schnellem Rühren und unter Stickstoff als Schutzgas gegeben. Nach einer Reaktionszeit von 90 min wurde die nun orange-rote Lösung bis zur Entfärbung mit 0,5 ml Propylenoxid behandelt. Die Lösung wurde dann zu einer Lösung von 10 g cyclischem Bisphenol A-Carbonat-Oligomeren in 60 ml Tetrahydrofuran gegeben. Nach einer Reaktionszeit von 120 min wurde das Reaktlonsgemisch in 200 ml einer 1%igen Lösung von 1 molarer Phosphorsäure in Methanol gegossen. Das Copolymer wurde isoliert, mit Methanol neutral gewaschen und getrocknet.

Ausbeute: 19,1 g

Die Analyse mit Hilfe der Gelpermeationschromatographie (Polystyrol-Eichung) ergab ein Molekulargewicht $\overline{M}_w$ von 15.500 g/mol.

5. Herstellung eines Blockcopolymerisats aus Poly(styrolisopren) und Bisphenol A-Polycarbonat

Zu einer Lösung von 4 g Styrol und 5 g Isopren in 30 ml Toluol wurden bei ca. 20° C 2.5 ml einer 1,3 molaren Lösung von sec.-Butyllithium in einem Gemische aus Cyclohexan und Isopentan (92:8 Vol.-%) unter schnellem Rühren und unter Stickstoff als Schutzgas gegeben. Nach einer Reaktionszeit von 90 min wurde die nun orange-rote Lösung bis zur Entfärbung mit ca. 0,5 ml Propylenoxid behandelt. Die Lösung wurde dann zu einer Lösung von 10 g cyclischem Bisphenol A-Carbonat-Oligomeren in 60 ml Tetrahydrofuran gegeben. Nach einer Reaktionszeit von 120 min wurde das Reaktionsgemisch in 200 ml einer 1%igen Lösung von 1 molarer Phosphorsäure in Methanol gegossen. Das Copolymer wurde isoliert, mit Methanol neutral gewaschen und getrocknet.

Die Analyse mit Hilfe der Gelpermeationschromatographie (Polystyrol-Eichung) ergab ein Molekulargewicht $\overline{M}_w$ von 14.000 g/mol.

## Ansprüche

1. Verfahren zur Herstellung von Blockcopolymerisaten aus anionisch polymerisierbaren Vinylverbindungen und cyclischen aromatischen Carbonat-Oligomeren, dadurch gekennzeichnet, daß man in einer ersten Stufe eine oder mehrere anionisch polymerisierbare Vinylverbindungen in einem aprotischen organischen Lösungsmittel mit einer Alkylalkalimetall- oder Arylalkalimetall-Verbindung als Initiator bei Temperaturen von -100 bis +80° C, und einem Monomer Lösungsmittel-Gewichtsverhältnis von 5:100 bis 50:100 zu Polymeranionen mit einem Molgewicht $\overline{M}_w$ (Massenmittel) von 3000 bis 500000 g/mol umsetzt, gegebenenfalls in einer zweiten Stufe die Reaktivität der gebildeten Polymeranionen vermindert, z.B. durch Umsetzung mit geeigneten Verbindungen wie Epoxiden, cyclischen aliphatischen Carbonaten oder Estern und in einer dritten Stufe cyclische aromatische Carbonat-Oligomere der Formel (I) zusammen mit den gebildeten Polymeranionen in einem polaren, aprotischen organischen Lösungsmittel polymerisiert.
Formel (I) ist:

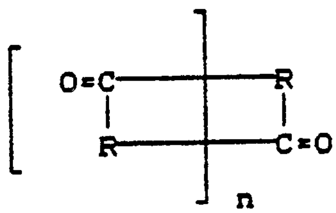

(I)

worin
n eine ganze Zahl von 1 bis 30
und
R ein Rest mit der Formel (II)

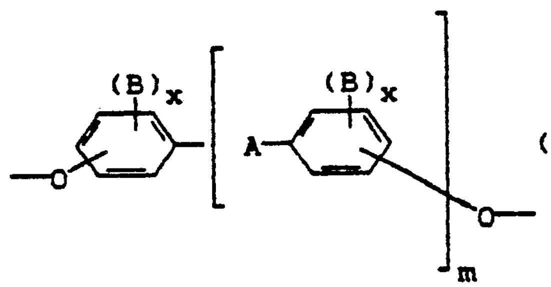

(II)

worin
A eine Einfachbindung, $C_1$- bis $C_5$-Alkylen, $C_2$- bis $C_5$-Alkyliden, $C_5$-bis $C_6$-Cycloalkyliden, -O-, -SO-, -S-, $-SO_2-$, -CO- oder ein Rest der Formel (IIa),

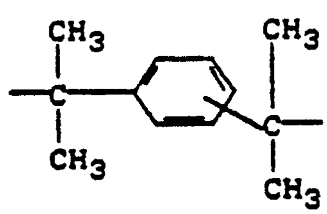

(IIa)

B Chlor, Brom oder Methyl
x die Zahlen 0, 1 oder 2 und
m die Zahlen 1 oder 0 bedeuten.

2. Blockcopolymerisate erhältlich gemäß Anspruch 1.